# EUROPEAN PATENT APPLICATION

(11) **EP 3 637 343 A1**
(43) Date of publication of application: **15.04.2020**
(21) Application number: 19192776.3
(22) Date of filing: 21.08.2019
(51) Int. Cl.: G06Q 20/20, G07G 1/01, G07G 1/12, G06F 1/16

(54) **SALES DATA PROCESSING APPARATUS**

(30) Priority: 10.10.2018 JP 2018192099
(71) Applicant: Toshiba Tec Kabushiki Kaisha, 141-8562 Tokyo (JP)
(72) Inventor: Mita, Kenji, Shinagawa-ku, Tokyo 141-8562 (JP)
(74) Representative: Bandpay & Greuter

(57) **Abstract**

A sales data processing apparatus comprises a detection module configured to detect a switching factor for switching an operator mode from a first mode in which a store clerk operates the sales data processing apparatus to a second mode in which a customer operates the sales data processing apparatus, or vice versa; a setting module configured to set the operator mode to the first mode or the second mode according to the switching factor detected by the detection module; and a control module configured to activate a device associated with the first mode or the second mode set by the setting module based on setting information in which a device enabled on condition that the operator mode is the first mode and a device enabled on condition that the operator mode is the second mode are determined.

## Description

### FIELD

Embodiments described herein relate generally to a sales data processing apparatus.

### BACKGROUND

A POS (Point Of Sales) terminal is used when a commodity is sold in a convenience store and a retail store such as a specialty store. The POS terminal includes a self-service POS terminal on which a customer operates to perform a commodity registration processing for registering a commodity to be sold and a checkout processing on the commodity registered by the commodity registration processing.

In such a retail store, there are various jobs such as a commodity display work (commodity replenishment) and a commodity order work, and thus a time zone in which shortage of a store clerk occurs during such works may arise. However, it is difficult in such a retail store that a full-time store clerk who mainly operates the POS terminal is assigned even if such a time zone is present. Thus, in the retail store, the POS terminal is desirably operated as a self-service POS terminal operated by the customer in the time zone in which the shortage of the store clerk occurs.

However, various kinds of devices and supplements are placed at the inside of a counter table on which the POS terminal is mounted and the POS terminal is usually operated by the store clerk who stands at the inside of the counter table. If the customer operates the POS terminal, the customer has to stand at the outside of the counter table on which the POS terminal serving as the self-service POS terminal is mounted. Person other than the store clerk is not allowed to enter into the inside of the counter table, i.e., store clerk side, and thus the customer cannot operate the device from the inside of the counter table.

### SUMMARY OF INVENTION

To solve such problem, there is provided a sales data processing apparatus, comprising:
a detection module configured to detect a switching factor for switching an operator mode from a first mode in which a store clerk operates the sales data processing apparatus to a second mode in which a customer operates the sales data processing apparatus, or vice versa;
a setting module configured to set the operator mode to the first mode or the second mode according to the switching factor detected by the detection module; and
a control module configured to activate a device associated with the first mode or the second mode set by the setting module based on setting information in which a device enabled on condition that the operator mode is the first mode and a device enabled on condition that the operator mode is the second mode are determined.

Preferably, the detection module detects an operation for switching from the first mode to the second mode or vice versa as the switching factor, and the setting module sets the operator mode to the first mode or the second mode designated by the operation.

Preferably still, the detection module detects as the switching factor that an orientation of a predetermined device is changed, and the setting module sets the operator mode to the first mode or the second mode according to the orientation of the device detected by the detection module.

Preferably yet, the detection module detects connection of a predetermined device as the switching factor, and the setting module sets the operator mode to the first mode or the second mode according to a type of the connected device.

Suitably, the detection module detects as the switching factor that a predetermined device is disabled, and the setting module sets the operator mode to the first mode or the second mode according to a type of the disabled device.

The invention also relates to a method for activating a device in accordance with an operator mode by a sales data processing apparatus having setting information in which a device enabled on condition that the operator mode is a first mode and a device enabled on condition that the operator mode is a second mode are determined, comprising:
detecting a switching factor for switching the operator mode from the first mode in which a store clerk operates the sales data processing apparatus to the second mode in which a customer operates the sales data processing apparatus, or vice versa;
setting the operator mode to the first mode or the second mode according to the detected switching factor; and
activating the device associated with the first mode or the second mode set based on the setting information.

Preferably, the method further comprises:
detecting an operation for switching from the first mode to the second mode or vice versa as the switching factor; and
setting the operator mode to the first mode or the second mode designated by the operation.

Preferably still, the method further comprises:
detecting as the switching factor that an orientation of a predetermined device is changed; and
setting the operator mode to the first mode or the second mode according to the orientation of the device detected by the detection module.

Preferably yet, the method further comprises:
detecting connection of a predetermined device as the switching factor; and
setting the operator mode to the first mode or the second mode according to a type of the connected device.

Suitably, the method further comprises:
detecting as the switching factor that a predetermined device is disabled; and
setting the operator mode to the first mode or the second mode according to a type of the disabled device.

The invention also concerns a computer program comprising instructions which, when the program is executed by a computer, cause the computer to carry out the steps of the method above.

The invention further relates to a computer-readable medium having stored thereon the computer program above.

### DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a perspective view illustrating an external appearance of a POS terminal;
Fig. 2 is a block diagram illustrating a hardware structure of the POS terminal;
Fig. 3 is a diagram illustrating data structure of a mode setting table;
Fig. 4 is a block diagram illustrating characteristic functional components of the POS terminal; and
Fig. 5 is a flowchart depicting a mode setting processing performed by the POS terminal.

### DETAILED DESCRIPTION

In accordance with an embodiment, a sales data processing apparatus comprises a detection module configured to detect a switching factor for switching an operator mode from a first mode in which a store clerk operates the sales data processing apparatus to a second mode in which a customer operates the sales data processing apparatus, or vice versa; a setting module configured to set the operator mode to the first mode or the second mode according to the switching factor detected by the detection module; and a control module configured to activate a device associated with the first mode or the second mode set by the setting module based on setting information in which a device enabled on condition that the operator mode is the first mode and a device enabled on condition that the operator mode is the second mode are determined.

Hereinafter, embodiments of a sales data processing apparatus are described below in detail with reference to the accompanying drawings. The sales data processing apparatus of the present embodiment is applied to a POS terminal installed in a retail store.

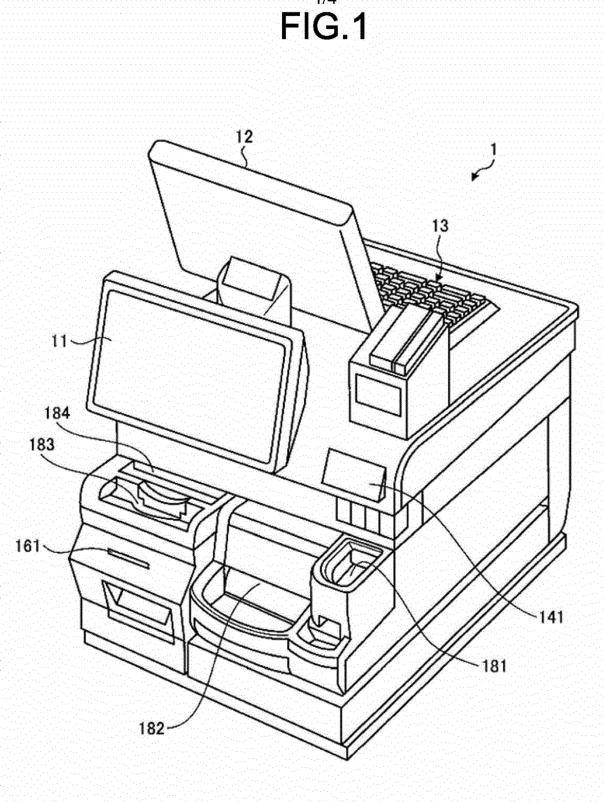

Fig. 1 is a perspective view illustrating the external appearance of a POS terminal 1. Fig. 1 shows the POS terminal 1 viewed from a customer side. The POS terminal 1 has a normal POS mode in which a store clerk performs both a commodity registration processing for registering a commodity to be sold and a checkout processing on the commodity registered by the commodity registration processing, and a self-service POS mode in which a customer performs both the commodity registration processing and the checkout processing.

In the self-service POS mode, the customer is present on a customer side to operate the POS terminal 1 executing the commodity registration processing and the checkout processing. On the other hand, in the normal POS mode, the store clerk is present on a store clerk (cashier) side opposite to the customer side across the POS terminal 1 to operate the POS terminal 1 executing the commodity registration processing and the checkout processing.

The POS terminal 1 is equipped with a first display section 11, a second display section 12 and a keyboard 13 on an upper surface thereof. The first display section 11 is a touch panel display in which a touch panel is laminated on a display surface. The first display section 11 displays various kinds of information towards the customer side.

The second display section 12 is a touch panel display in which a touch panel is laminated on a display surface. The second display section 12 is oriented in a direction opposite to that of the first display section 11. Specifically, the second display section 12 displays various kinds of information towards the store clerk side. The keyboard 13 includes various keys for operating the POS terminal 1. The keyboard 13 is arranged on a front surface side of the second display section 12.

The POS terminal 1 is also equipped with a first reading window 141, a first receipt discharge port 161, a first coin insertion slot 181, a first coin dispensing port 182, a first bill deposit port 183 and a first bill dispensing port 184 on a side surface thereof on the customer side. The first reading window 141, the first receipt discharge port 161, the first coin insertion slot 181, the first coin dispensing port 182, the first bill deposit port 183 and the first bill dispensing port 184 are oriented to the customer side.

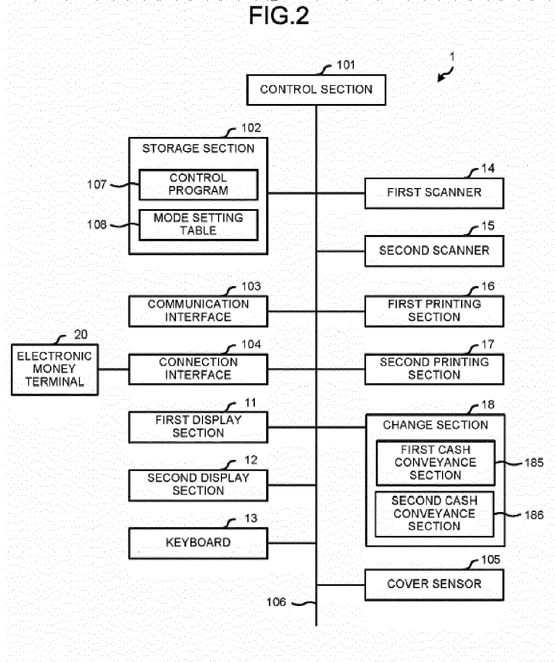

The first reading window 141 is formed of a light permeable (transparent) plate. The first reading window 141 transmits light from a first scanner 14 (refer to Fig. 2) housed in the POS terminal 1 to the outside therethrough. The first scanner 14 scans a code symbol such as a barcode or a two-dimensional code held in front of the first reading window 141. The code symbol is attached to a commodity to represent information of the commodity. The first scanner 14 reads out information of the commodity through the code symbol when performing a registration processing of the commodity.

The first receipt discharge port 161 discharges a receipt or the like issued by a first printing section 16 (refer to Fig. 2) housed in the POS terminal 1. The first printing section 16 includes a printer that issues a receipt on which various kinds of information relating to one transaction is printed.

The POS terminal 1 is provided with a change section 18 (refer to Fig. 2) therein. The change section 18 is a well-known device such as a change machine for storing inserted cash and dispensing stored cash as a change. The change section 18 is not limited to a change machine that handles both coins and bills, and may be a change machine that handles either coins or bills.

The first coin insertion slot 181 receives coins inserted therethrough. The first coin dispensing port 182 discharges coins stored in the change machine. The first bill deposit port 183 receives bills inserted therethrough. The first bill dispensing port 184 discharges bills stored in the change machine.

The change section 18 enables a first cash conveyance section 185 (refer to Fig. 2) to convey coins inserted from the first coin insertion slot 181 and bills inserted from the first bill deposit port 183 to a cash storing section (not shown). The change section 18 enables the first cash conveyance section 185 to convey coins discharged through the first coin dispensing port 182 and bills discharged through the first bill dispensing port 184 from the cash storing section. The first cash conveyance section 185 has a conveyance belt (not shown) for conveying cash (bills and coins) to the cash storing section, a conveyance motor for driving the conveyance belt, and the like.

In the POS terminal 1, a detachable cover (not shown) that covers the customer side of the POS terminal 1 can be mounted. More specifically, in the POS terminal 1, the detachable cover can cover the first reading window 141, the first receipt discharge port 161, the first coin insertion slot 181, the first coin dispensing port 182, the first bill deposit port 183 and the first bill dispensing port 184. For example, the detachable cover is mounted on the POS terminal 1 to prevent an unintended operation by the customer. The detachable cover is not limited to covering all of the first reading window 141, the first receipt discharge port 161, the first coin insertion slot 181, the first coin dispensing port 182, the first bill deposit port 183 and the first bill dispensing port 184, and may cover any one of the above devices or a part of the POS terminal 1 on the customer side.

The POS terminal 1 has a second reading window (not shown), a second receipt discharge port (not shown), a second coin insertion slot (not shown), a second coin dispensing port (not shown), a second bill deposit port (not shown), and a second bill dispensing port (not shown) on a side surface thereof on the store clerk side. Then, the second reading window, the second receipt discharge port, the second coin insertion slot, the second coin dispensing port, the second bill deposit port, and the second bill dispensing port are oriented to the store clerk side.

The second reading window is formed of a light permeable plate. The second reading window transmits light from a second scanner 15 (refer to Fig. 2) housed in the POS terminal 1 to the outside therethrough. The second scanner 15 scans a code symbol such as a barcode or a two-dimensional code held in front of the second reading window. The code symbol is attached to a commodity to represent information of the commodity. The second scanner 15 reads out information of the commodity through the code symbol when performing a registration processing of the commodity.

The second receipt discharge port discharges a receipt or the like issued by a second printing section 17 (refer to Fig. 2) housed in the POS terminal 1. The second printing section 17 includes a printer that issues a receipt on which various kinds of information relating to one transaction are printed.

The second coin insertion slot receives coins inserted therethrough. The second coin dispensing port discharges coins stored in the change machine. The second bill deposit port receives bills inserted therethrough. The second bill dispensing port discharges bills stored in the change machine.

The change section 18 enables a second cash conveyance section 186 (refer to Fig. 2) to convey coins inserted from the second coin insertion slot and bills inserted from the second bill deposit port to a cash storing section (not shown). The change section 18 enables the second cash conveyance section 186 to convey coins discharged through the second coin dispensing port and bills discharged through the second bill dispensing port from the cash storing section (not shown). The second cash conveyance section 186 has a conveyance belt (not shown) for conveying cash (bills and coins) to the cash storing section, a conveyance motor for driving the conveyance belt, and the like.

The POS terminal 1 is provided with one change section 18 to discharge and deposit cash on both the customer side and the store clerk side. However, the POS terminal 1 may be provided with two change machines in which one change machine is oriented to the customer side and the other change machine is oriented to the store clerk side. Alternatively, the POS terminal 1 may be provided with a change machine that can be oriented to either the customer side or the store clerk side by the rotation. In this case, the change machine may include a discharge port and a deposit port for cash on either the customer side or the store clerk side. In such a change machine, the discharge port and the deposit port for cash are oriented to the store clerk side in the normal POS mode, and in the self-service POS mode, the discharge port and the deposit port for cash are oriented to the customer side.

The hardware structure of the POS terminal 1 is described. Fig. 2 is a block diagram illustrating the hardware structure of the POS terminal 1. The POS terminal 1 includes a control section 101, a storage section 102, a communication interface 103, a connection interface 104, the first display section 11, the second display section 12, the keyboard 13, the first scanner 14, the second scanner 15, the first printing section 16, the second printing section 17, the change section 18 and a cover sensor 105. These sections are mutually connected via a system bus 106 such as a data bus and an address bus.

The control section 101 is a computer that controls the entire operation of the POS terminal 1 to realize various functions of the POS terminal 1. The control section 101 includes a CPU (Central Processing Unit), a ROM (Read Only Memory) and a RAM (Random Access Memory). The CPU collectively controls the operation of the POS terminal 1. The ROM is a non-volatile storage medium that holds various kinds of data even if no electric power is supplied. The RAM is capable of reading and writing data from and to a designated area. Then, the CPU executes a program stored in the ROM or the storage section 102 on the RAM as a work area.

The storage section 102 is a memory device such as an HDD (Hard Disk Drive) or an SSD (Solid State Drive). The storage section 102 stores a control program 107 and a mode setting table 108. The mode setting table 108 is not limited to being stored in the storage section 102, and may be stored in another device such as a store server.

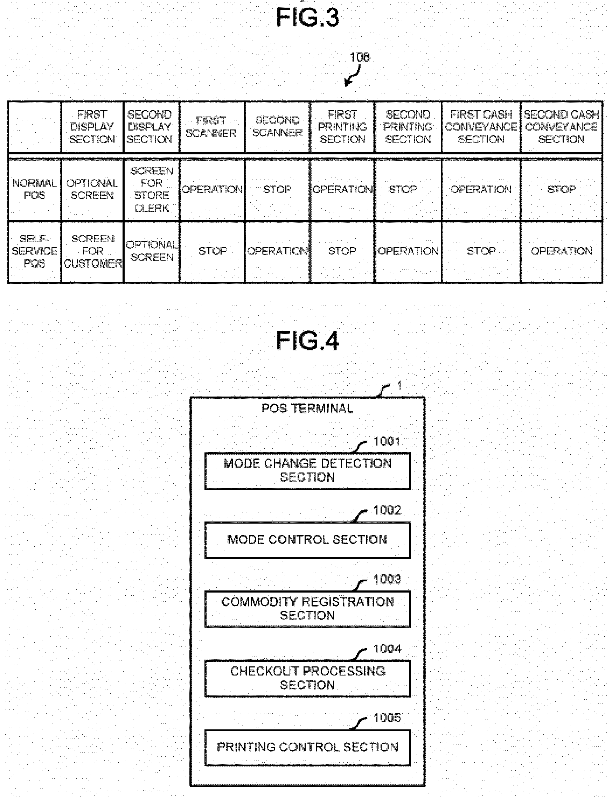

Fig. 3 is a diagram illustrating the data structure of the mode setting table 108. The mode setting table 108 stores setting information in which an operating state of each device is set in each operator mode in which an operator who operates the POS terminal 1 is either the store clerk or the customer. The operator mode includes a normal POS mode in which the store clerk operates the POS terminal 1 and a self-service POS mode in which the customer operates the POS terminal 1. Then, in the mode setting table 108, devices used if the operator mode is the normal POS mode and devices used if the operator mode is the self-service POS mode are respectively determined. The devices used in either the normal POS mode or the self-service POS mode include the first display section 11, the second display section 12, the first scanner 14, the second scanner 15, the first printing section 16, the second printing section 17, the first cash conveyance section 185, and the second cash conveyance section 186. The mode setting table 108 may further include other devices in addition to these devices described above.

In the normal POS mode, the first display section 11 displays an optional screen. The optional screen is, for example, a screen showing a registered commodity, a screen showing a total amount in the checkout processing, or a screen for receiving an operation for switching from the normal POS mode to the self-service POS mode. In the normal POS mode, the second display section 12 displays a screen for the store clerk who operates the POS terminal 1 to execute the commodity registration processing and the checkout processing.

In the normal POS mode, devices oriented to the store clerk side such as the first scanner 14, the first printing section 16 and the first cash conveyance section 185 are enabled or activated. On the other hand, in the normal POS mode, devices oriented to the customer side such as the second scanner 15, the second printing section 17 and the second cash conveyance section 186 are disabled or not activated.

In the self-service POS mode, the first display section 11 displays a screen for the customer who operates the POS terminal 1 to execute the commodity registration processing and the checkout processing. In the self-service POS mode, the second display section 12 displays an optional screen. The optional screen is, for example, a screen showing the registered commodity, a screen showing the total amount in the checkout processing, or a screen for receiving an operation for switching from the self-service POS mode to the normal POS mode.

In the self-service POS mode, devices oriented to the customer side such as the second scanner 15, the second printing section 17 and the second cash conveyance section 186 are enabled. On the other hand, in the self-service POS mode, devices oriented to the store clerk side such as the first scanner 14, the first printing section 16 and the first cash conveyance section 185 are disabled.

The communication interface 103 is used for communicating with an external device connected to the network.

The connection interface 104 is used for connecting to an external device. For example, the connection interface 104 is a USB (Universal Serial Bus) interface. The connection interface 104 is not limited to a USB interface, but may be an interface connected in conformity with another standard. For example, the connection interface 104 is connected to an electronic money terminal 20 capable of performing electronic money settlement. In an electronic money settlement, a desired amount of money is deposited on a card or a portable terminal in advance by a so-called charge processing and an electronic money terminal 20 performs settlement by transmitting and receiving necessary information to and from the card or the portable terminal via near field wireless communication to settle the total amount of one transaction.

The cover sensor 105 detects whether or not the detachable cover for covering the first reading window 141, the first receipt discharge port 161, the first coin insertion slot 181, the first coin dispensing port 182, the first bill deposit port 183 and the first bill dispensing port 184 is mounted. The cover sensor 105 may detect the detachable cover optically, detect the detachable cover mechanically, or detect the detachable cover in other methods.

Next, characteristic functions of the POS terminal 1 are described. Fig. 4 is a block diagram illustrating characteristic functional components of the POS terminal 1.

The control section 101 of the POS terminal 1 copies or decompresses the control program 107 in the storage section 102 on the RAM and operates according to the control program 107 to generate functional sections shown in Fig. 4 on the RAM. Specifically, the control section 101 of the POS terminal 1 includes a mode change detection section 1001, a mode control section 1002, a commodity registration section 1003, a checkout processing section 1004 and a printing control section 1005 as functional sections.

The mode change detection section 1001 is an example of a detection module. The mode change detection section 1001 detects a switching factor causing switching of the operator mode from the normal POS mode in which the store clerk operates the POS terminal 1 to the self-service POS mode in which the customer operates the POS terminal 1, or vice versa.

For example, the mode change detection section 1001 detects an operation of switching the operator mode from the normal POS mode to the self-service POS mode or vice versa as the switching factor. More specifically, when a switching button for switching of the operator mode from the normal POS mode to the self-service POS mode or vice versa is displayed on the second display section 12 oriented to the store clerk side, the mode change detection section 1001 detects the pressing on the switching button as the switching factor. The store clerk switches the operator mode from the normal POS mode to the self-service POS mode if the number of store clerks becomes small. A display condition for displaying the switching button may be set. For example, the switching button may be displayed on the second display section 12 when a preset time zone arises. Alternatively, the switching button may be displayed on condition that the number of store clerks who are working together is smaller than a threshold value based on a shift work table in which working time of each store clerk for one week or one month is registered.

For example, the mode change detection section 1001 may detect as the switching factor that a predetermined device is connected. More specifically, in some retail store, an operation in which a cash settlement is prohibited and an electronic money settlement is permitted in the self-service POS mode is determined in practice. In this case, the mode change detection section 1001 detects that the electronic money terminal 20 is connected to the connection interface 104. When an external device is connected to the connection interface 104, the mode change detection section 1001 specifies the type of the connected external device based on the connection information output from the external device. Then, if the external device connected is the electronic money terminal 20, the mode change detection section 1001 determines that the predetermined device is connected. The predetermined device is not limited to the electronic money terminal 20, and may be another type of device.

For example, the mode change detection section 1001 may detect as the switching factor that a predetermined device is disabled. More specifically, in the normal POS mode, the store clerk mounts the detachable cover for covering the customer side of the POS terminal 1 on the POS terminal 1. In this way, the customer cannot use the first scanner 14, the first printing section 16 and the first cash conveyance section 185. Therefore, the mode change detection section 1001 detects as the switching factor that the cover sensor detects the detachable cover covering the customer side of the POS terminal 1.

For example, the mode change detection section 1001 may detect as the switching factor that the orientation of a predetermined device is changed. For example, in the case in which the POS terminal 1 has a change machine, of which orientation can be changed by the rotation, having the dispensing port and the deposit port for cash on either the customer side or the store clerk side, the mode change detection section 1001 detects as the switching factor that the orientation of the change machine is changed.

The mode control section 1002 is an example of a setting module. The mode control section 1002 changes the operator mode to the normal POS mode or the self-service POS mode according to the switching factor detected by the mode change detection section 1001.

For example, when the mode change detection section 1001 detects the operation for switching of the operator mode from the normal POS mode to the self-service POS mode or vice versa, the mode control section 1002 sets the operator mode to the normal POS mode or the self-service POS mode designated by the operation for switching the operator mode.

For example, the mode control section 1002 may set the operator mode to the normal POS mode or the self-service POS mode according to the type of the connected device. In this case, the storage section 102 stores device correspondence information in which the normal POS mode or the self-service POS mode is associated with each type of device. When the mode change detection section 1001 detects as the switching factor that the predetermined device is connected, the mode control section 1002 sets the operator mode to the normal POS mode or the self-service POS mode according to the device correspondence information described above. For example, if the mode change detection section 1001 detects the connection of the electronic money terminal 20 as the switching factor, the mode control section 1002 sets the operator mode to the self-service POS mode associated with the electronic money terminal 20 in the device correspondence information.

For example, the mode control section 1002 may set the operator mode to the normal POS mode or the self-service POS mode according to the type of disabled device. In this case, the storage section 102 stores stop-device correspondence information in which the normal POS mode or the self-service POS mode is associated with each type of the disabled device. When the mode change detection section 1001 detects as the switching factor that the predetermined device is disabled, the mode control section 1002 sets the operator mode to the normal POS mode or the self-service POS mode associated with the type of the disabled device in the stop-device correspondence information. For example, if the mode change detection section 1001 detects as the switching factor that the first scanner 14, the first printing section 16 and the first cash conveyance section 185 are disabled, the mode control section 1002 sets the operator mode to the normal POS mode associated with these devices. The mode control section 1002 may set the operator mode to the normal POS mode when disablement of any one of the first scanner 14, the first printing section 16 and the first cash conveyance section 185 instead of all the devices is detected as the switching factor.

For example, the mode control section 1002 may set the operator mode to the normal POS mode or the self-service POS mode according to the orientation of the device. In this case, the storage section 102 stores device orientation correspondence information in which the normal POS mode or the self-service POS mode is associated with each device and orientation of the device. When the mode change detection section 1001 detects as the switching factor that the orientation of the change machine is changed, the mode control section 1002 sets the operator mode to the normal POS mode or the self-service POS mode associated with the device orientation of which is changed and the orientation of the device after changing the orientation. For example, if the mode change detection section 1001 detects as the switching factor that the orientation of the change machine is changed, the mode control section 1002 sets the operator mode to the normal POS mode on condition that the change machine is oriented to the store clerk side. On the other hand, if the mode change detection section 1001 detects that the orientation of the change machine is changed, the mode control section 1002 sets the operator mode to the self-service POS mode on condition that the change machine is oriented to the customer side.

AS opposed to the above, there is a case in which both a condition for setting the operator mode to the normal POS mode and a condition for setting the operator mode to the self-service POS mode are satisfied. For example, if the detection indicating that the cover for covering the customer side of the POS terminal 1 is mounted is made as the condition for setting the operator mode to the normal POS mode. An operation for setting the operator mode to the self-service POS mode is made as the condition for setting the operator mode to the self-service POS mode. If the operation for setting the operator mode to the self-service POS mode is received when the cover for covering the customer side of the POS terminal 1 is mounted, both the condition for setting the operator mode to the normal POS mode and the condition for setting the operator mode to the self-service POS mode are satisfied, resulting in occurrence of contradiction.

The mode control section 1002 determines which one, i.e., the normal POS mode or the self-service POS mode, is set as the operator mode. For example, the mode control section 1002 sets the operator mode to the normal POS mode or the self-service POS mode based on a priority set for each condition. In this case, the storage section 102 stores priority information in which different priority is set for each condition for setting the operator mode to the normal POS mode or the self-service POS mode. Then, the mode control section 1002 sets the operator mode to the normal POS mode or the self-service POS mode associated with the condition having highest priority among the satisfied conditions when a contradiction occurs.

Alternatively, the mode control section 1002 may control the second display section 12 to display a selection screen for requesting selection of setting the operator mode to either the normal POS mode or the self-service POS mode. The mode control section 1002 sets the operator mode to the normal POS mode or the self-service POS mode selected on the selection screen.

Alternatively, the mode control section 1002 may control the second display section 12 to display a notification screen for notifying that both the condition for setting the operator mode to the normal POS mode and the condition for setting the operator mode to the self-service POS mode are satisfied and thus the contradiction occurs. The notification screen includes information such as a message for requesting elimination of the contradiction. The mode control section 1002 sets the operator mode to the normal POS mode or the self-service POS mode for which the condition is satisfied when the contradiction is eliminated. For example, if the contradiction occurs due to reception of the operation for setting the operator mode to the self-service POS mode when the cover for covering the customer side of the POS terminal 1 is mounted, the mode control section 1002 sets the operator mode to the self-service POS mode on condition that the cover is removed.

The commodity registration section 1003, the checkout processing section 1004 and the printing control section 1005 are examples of a control module. The commodity registration section 1003, the checkout processing section 1004 and the printing control section 1005 execute various kinds of processing by operating the devices corresponding to the operator mode set by the mode control section 1002 based on the mode setting table 108.

The commodity registration section 1003 controls the first display section 11, the second display section 12, the first scanner 14 and the second scanner 15 to execute a commodity registration processing for registering the commodity to be sold. For example, in the normal POS mode, based on the mode setting table 108, the commodity registration section 1003 controls the second display section 12 to display a commodity registration screen for store clerk to guide the registration of the commodity to be sold. Furthermore, when the second scanner 15 reads the commodity information, the commodity registration section 1003 registers a commodity specified by the commodity information as the commodity to be sold. On the other hand, in the self-service POS mode, the commodity registration section 1003 controls the first display section 11 to display a commodity registration screen for customer to guide the registration of the commodity to be sold based on the mode setting table 108. Furthermore, when the first scanner 14 reads the commodity information, the commodity registration section 1003 registers a commodity specified by the commodity information as the commodity to be sold.

The checkout processing section 1004 controls the first cash conveyance section 185 and the second cash conveyance section 186 of the change section 18 to execute the checkout processing on the commodity registered by the commodity registration processing. For example, in the self-service POS mode, the checkout processing section 1004 controls the second cash conveyance section 186 to convey the inserted cash to the storing section based on the mode setting table 108. Furthermore, the checkout processing section 1004 controls the second cash conveyance section 186 to convey cash to be dispensed if a change is needed. On the other hand, in the normal POS mode, the checkout processing section 1004 controls the first cash conveyance section 185 to convey the inserted cash to the storing section based on the mode setting table 108. Furthermore, the checkout processing section 1004 controls the first cash conveyance section 185 to convey cash to be dispensed if a change is needed.

The printing control section 1005 controls the first printing section 16 and the second printing section 17 to execute a printing processing for printing a receipt on which various kinds of information relating to one transaction are printed. The receipt includes a name of the commodity registered by the commodity registration processing, a total amount deposit in the checkout processing and a change amount to be dispensed. For example, in the self-service POS mode, the printing control section 1005 controls the second printing section 17 to print a receipt based on the mode setting table 108. On the other hand, in the normal POS mode, the printing control section 1005 controls the first printing section 16 to print a receipt based on the mode setting table 108.

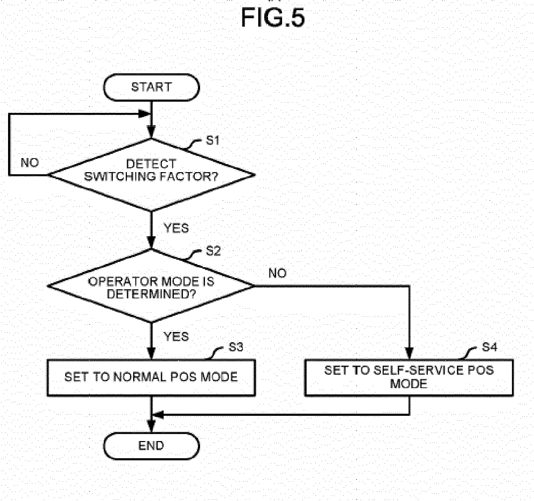

Next, a mode setting processing performed by the POS terminal 1 is described. Fig. 5 is a flowchart depicting the mode setting processing performed by the POS terminal 1. The mode change detection section 1001 determines whether or not the switching factor for changing the operator mode is detected (Act S1).

If the switching factor is not detected (No in Act S1), the mode change detection section 1001 stands by until the switching factor is detected.

If the switching factor is detected (Yes in Act S1), the mode control section 1002 determines which one, i.e., the normal POS mode or the self-service POS mode, is set as the operator mode according to the switching factor detected by the mode change detection section 1001 (Act S2).

If it is determined to set the operator mode to the normal POS mode (Yes in Act S2), the mode control section 1002 sets the operator mode to the normal POS mode (Act S3). In this way, the first display section 11 displays the screen for customer. The first scanner 14, the first printing section 16 and the first cash conveyance section 185 are enabled or activated. On the other hand, the second scanner 15, the second printing section 17 and the second cash conveyance section 186 are disabled or not activated.

On the other hand, if it is determined to set the operator mode to the self-service POS mode (No in Act S2), the mode control section 1002 sets the operator mode to the self-service POS mode (Act S4). In this way, the second display section 12 displays the screen for store clerk. The second scanner 15, the second printing section 17 and the second cash conveyance section 186 are enabled or activated. On the other hand, the first scanner 14, the first printing section 16 and the first cash conveyance section 185 are disabled or not activated.

Thus, the POS terminal 1 terminates the mode setting processing.

As described above, the POS terminal 1 according to the present embodiment detects the pressing on the switching button, as the switching factor, for instructing switching of the operator mode from the normal POS mode to the self-service POS mode or vice versa. When the POS terminal 1 detects the switching factor such as the pressing on switching button, the POS terminal 1 switches the operator mode from a mode currently set to the other mode. Then, the POS terminal 1 activates the device or devices associated with the set operator mode (normal POS mode or self-service POS mode) in the mode setting table 108. Specifically, the POS terminal 1 activates the device on a side, i.e., store clerk side or customer side, where an operator specified based on the set operator mode is present. Therefore, the POS terminal 1 can switch the device according to the set operator mode.

The program executed by each device of the foregoing embodiment and the modification may be incorporated into a storage medium (ROM or storage section) of each device to be provided; however, it is not limited thereto. The program may be recorded in a computer-readable recording medium such as a CD-ROM (Compact Disc Read-Only Memory), an FD (Flexible Disk), a CD-R (Compact Disk Recordable), a DVD (Digital Versatile Disk) and the like in the form of installable or executable file to be provided. Further, the storage medium is not limited to a medium independent from a computer or an embedded system, and also contains a storage medium that stores or temporarily stores the programs by downloading the program transmitted through a LAN (Local Area Network) or an Internet.

Further, the program executed by each device of the foregoing embodiment and the modification may be provided by being stored in a computer connected with a network such as the Internet and downloaded via the network or may be provided or distributed via the network such as the Internet.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the scope of the invention. The accompanying claims and their equivalents are intended to cover such forms or modifications as would fall within the scope of the invention.

## Claims

1. A sales data processing apparatus, comprising:
a detection module configured to detect a switching factor for switching an operator mode from a first mode in which a store clerk operates the sales data processing apparatus to a second mode in which a customer operates the sales data processing apparatus, or vice versa;
a setting module configured to set the operator mode to the first mode or the second mode according to the switching factor detected by the detection module; and
a control module configured to activate a device associated with the first mode or the second mode set by the setting module based on setting information in which a device enabled on condition that the operator mode is the first mode and a device enabled on condition that the operator mode is the second mode are determined.

2. The sales data processing apparatus according to claim 1, wherein the detection module detects an operation for switching from the first mode to the second mode or vice versa as the switching factor, and the setting module sets the operator mode to the first mode or the second mode designated by the operation.

3. The sales data processing apparatus according to claim 1 or 2, wherein the detection module detects as the switching factor that an orientation of a predetermined device is changed, and the setting module sets the operator mode to the first mode or the second mode according to the orientation of the device detected by the detection module.

4. The sales data processing apparatus according to any one of claims 1 to 3, wherein the detection module detects connection of a predetermined device as the switching factor, and the setting module sets the operator mode to the first mode or the second mode according to a type of the connected device.

5. The sales data processing apparatus according to any one of claims 1 to 4, wherein the detection module detects as the switching factor that a predetermined device is disabled, and the setting module sets the operator mode to the first mode or the second mode according to a type of the disabled device.

6. A method for activating a device in accordance with an operator mode by a sales data processing apparatus having setting information in which a device enabled on condition that the operator mode is a first mode and a device enabled on condition that the operator mode is a second mode are determined, comprising:
detecting a switching factor for switching the operator mode from the first mode in which a store clerk operates the sales data processing apparatus to the second mode in which a customer operates the sales data processing apparatus, or vice versa;
setting the operator mode to the first mode or the second mode according to the detected switching factor; and
activating the device associated with the first mode or the second mode set based on the setting information.

7. The method according to claim 6, further comprising:
detecting an operation for switching from the first mode to the second mode or vice versa as the switching factor; and
setting the operator mode to the first mode or the second mode designated by the operation.

8. The method according to claim 6 or 7, further comprising:
detecting as the switching factor that an orientation of a predetermined device is changed; and
setting the operator mode to the first mode or the second mode according to the orientation of the device detected by the detection module.

9. The method according to any one of claims 6 to 8, further comprising:
detecting connection of a predetermined device as the switching factor; and
setting the operator mode to the first mode or the second mode according to a type of the connected device.

10. The method according to any one of claims 6 to 9, further comprising:
detecting as the switching factor that a predetermined device is disabled; and
setting the operator mode to the first mode or the second mode according to a type of the disabled device.

11. A computer program comprising instructions which, when the program is executed by a computer, cause the computer to carry out the steps of the method according to any one of claims 6 to 10.

12. A computer-readable medium having stored thereon the computer program of claim 11.
